# EUROPÄISCHE PATENTANMELDUNG

(11) **EP 1 096 214 A1**
(43) Veröffentlichungstag der Anmeldung: **02.05.2001**
(21) Anmeldenummer: 99810969.8
(22) Anmeldetag: 25.10.1999
(51) Int. Cl.: F26B 3/12, F26B 23/00

(54) **Verfahren zum gleichzeitigen Erzeugen von elektrischer Energie und von pulverförmigem Trockengut und Vorrichtung zur Durchführung dieses Verfahrens**

(71) Anmelder: ABB Energy Leasing S.à.r.l., 8050 Zürich (CH)
(72) Erfinder: Guiette, Jean-Louis, 8046 Zürich (CH); Van Trigt, Paul, 5400 Baden (CH); Land, Gerrit, 8081 JW Elburg (NL)
(74) Vertreter: ABB Patent Attorneys

(57) **Zusammenfassung**

Das Verfahren dient dem gleichzeitigen Erzeugen von elektrischer Energie und von pulverförmigem Trockengut. Die elektrische Energie wird von einem von einer Wärmekraftmaschine angetriebenen Generator (2) erzeugt. Das Trockengut wird aus einer sprühfähigen Masse erzeugt, die in einem heissen Luftstrom (7) zerstäubt und getrocknet wird. Als Wärmekraftmaschine wird ein Verbrennungsmotor (1) mit Flüssigkeitskühlung (3) verwendet. Der Luftstrom (7) und/oder die sprühfähige Masse werden durch die von der Flüssigkeitskühlung (3) aufgenommene Wärme vorgewärmt. Durch diese Massnahmen wird die beim Betrieb der Verbrennungskraftmaschine freigesetzte thermische Energie gut ausgenutzt und so ein hoher Wirkungsgrad des Verfahrens erreicht.

## Beschreibung

### TECHNISCHES GEBIET

Bei der Erfindung wird ausgegangen von einem Verfahren nach dem Oberbegriff von Patentanspruch 1. Die Erfindung betrifft auch eine Vorrichtung zur Durchführung dieses Verfahrens.

### STAND DER TECHNIK

Verfahren und Vorrichtungen der vorgenannten Art werden in zunehmendem Masse in Fertigungsstätten der chemischen und keramischen sowie der Lebensmittelindustrie verwendet. Die elektrische Energie wird hierbei im allgemeinen von einem von einer Wärmekraftmaschine angetriebenen Generator geliefert. Die Abgase der Wärmekraftmaschine, etwa einer Gasturbine, können in den Arbeitsprozess eines Sprühtrockners eingespeist werden, in welchem eine sprühfähige Masse zerstäubt und die zerstäubte Masse unter Bildung eines pulverförmigen Trockengutes getrocknet wird. Hierbei wird die Erzeugung von in den Fertigungsstätten sowieso benötigtem Strom mit der Herstellung eines pulverförmigen Trockenguts kombiniert. Da die Abgase der Wärmekraftmaschine im allgemeinen zum Erwärmen eines die sprühfähige Masse zerstäubenden Luftstroms verwendet werden, kann so unter beträchtlicher Einsparung von Zeit und Energie in vergleichsweise rationeller Weise gefertigt werden.

### KURZE DARSTELLUNG DER ERFINDUNG

Der Erfindung, wie sie in den Patentansprüchen definiert ist, liegt die Aufgabe zugrunde, ein Verfahren der eingangs genannten Art zu schaffen, welches sich energietechnisch durch einen hohen Wirkungsgrad auszeichnet. Zugleich ist es Aufgabe der Erfindung, eine vorteilhaft einfach aufgebaute Vorrichtung zur Durchführung dieses Verfahrens anzugeben.

Beim erfindungsgemässen Verfahren wird die von der Flüssigkeitskühlung abgeführte Verlustwärmemenge eines zum Antrieb eines stromerzeugenden Generators benötigten Verbrennungsmotors mit Flüssigkeitskühlung zum Vorwärmen eines Luftstroms bzw. einer sprühfähigen Masse ausgenutzt. Da diese Verlustwärmemenge einen ganz beträchtlichen Teil der gesamten thermischen Verluste des Verbrennungsmotors ausmacht, zeichnet sich das erfindungsgemässe Verfahren in vorteilhafter Weise durch einen hohen Wirkungsgrad aus.

Im Hinblick auf eine zusätzliche Erhöhung des Wirkungsgrads des erfindungsgemässen Verfahrens ist es zu empfehlen, dass vom Verbrennungsmotor abgegebene heisse Abgase dem zur Zerstäubung der sprühfähigen Masse verwendeten Luftstrom zugeführt werden.

Da die Herstellung von gewissen pulverförmigen Trockengütern eine relativ hohe Sprüh- und Trockentemperatur erfordert, ist es gegebenenfalls von Vorteil, die Abgase in den bereits durch Flüssigkeitskühlung vorgewärmten Luftstrom einzumischen.

Ist keine besonders hohe Sprüh- und Trockentemperatur notwendig, so kann der Luftstrom an der Flüssigkeitskühlung vorbeigeführt und unmittelbar mit den Abgasen des Verbrennungsmotors gemischt werden.

Eine weitere Steigerung des Wirkungsgrades des erfindungsgemässen Verfahrens lässt sich dann erreichen, wenn ein Teil der von der Flüssigkeitskühlung aufgenommenen Wärme über ein wärmespeicherndes Medium in einen vom Luftstrom durchströmten ersten und/oder einen von der sprühfähigen Masse durchströmten zweiten Wärmeaustauscher geführt wird.

Besonders einfach auszuführen ist das erfindungsgemässe Verfahren dann, wenn zumindest ein Teil der von der Flüssigkeitskühlung aufgenommenen Wärme unmittelbar in den Luftstrom und/oder in die sprühfähige Masse geführt wird.

In einer fertigungstechnisch bevorzugten Ausführungsform einer Vorrichtung zur Durchführung des erfindungsgemässen Verfahrens weist die Flüssigkeitskühlung einen vom Luftstrom durchströmten Wasserkühler auf. Zur Erhöhung des Wirkungsgrades dieser Vorrichtung ist es zu empfehlen, in Serie zum Wasserkühler einen vom Luftstrom durchströmter Wärmeaustauscher zu schalten, dem von einem als Öl- und/oder Zwischenkühler ausgebildeten Teil der Flüssigkeitskühlung des Verbrennungsmotors ein wärmeabgebendes Medium zugeführt wird.

Neben dem Wasserkühler und dem gegebenenfalls vorgesehenen Wärmeaustauscher kann zusätzlich ein von der sprühfähigen Masse durchströmter Wärmeaustauscher vorgesehen sein, welchem von einem als Öl- und/oder Zwischenkühler ausgebildeten Teil der Flüssigkeitskühlung des Verbrennungsmotors ein wärmeabgebendes Medium zugeführt wird. Verbleibende thermische Verluste des Verbrennungsmotors, die nicht zum Vorwärmen des Luftstroms verwendet werden können, tragen so zum Vorwärmen der sprühfähigen Masse und damit zur Erhöhung des Wirkungsgrades der Vorrichtung bei.

Die in den Abgasen des Verbrennungsmotors gespeicherten Wärmemengen lassen sich besonders günstig ausnutzen, wenn in Serie zum Wasserkühler mindestens eine die Abgase im Luftstrom verteilende Mischvorrichtung geschaltet ist.

### KURZE BESCHREIBUNG DER ZEICHNUNGEN

Diese und weitere Vorteile der Erfindung werden nachfolgend anhand einer Zeichnung näher erläutert. Hierbei zeigt die einzige Figur ein Blockschaltbild einer Vorrichtung zur Durchführung des erfindungsgemässen Verfahrens.

### WEG ZUR AUSFÜHRUNG DER ERFINDUNG

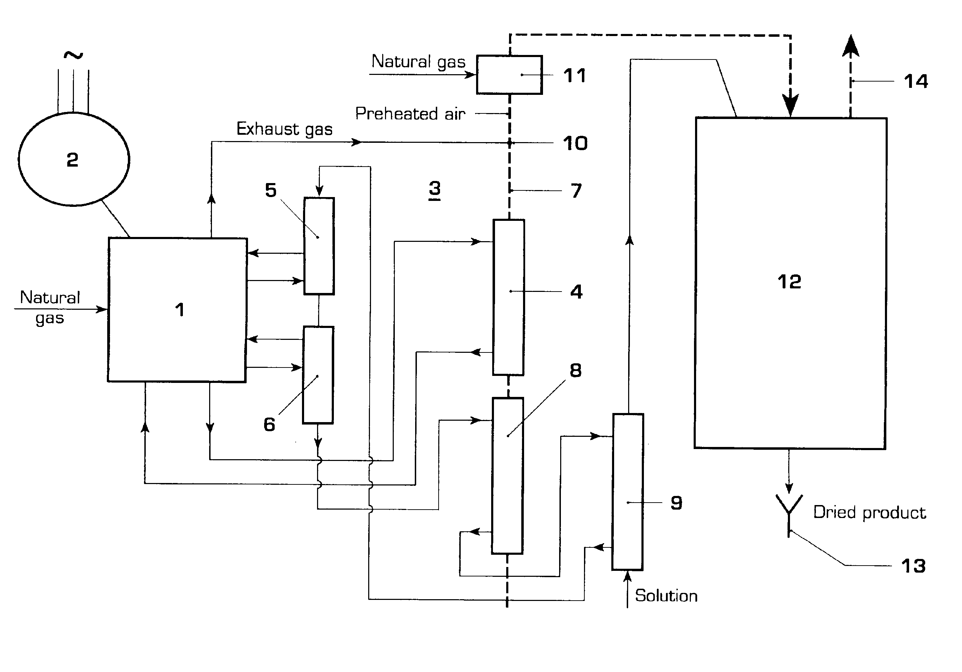

Die in Fig.1 dargestellte Vorrichtung zeigt einen als Gasmotor ausgeführten und mit Erdgas betriebenen Verbrennungsmotor 1. Dieser Motor treibt einen in ein elektrisches Versorgungsnetz einspeisenden Generator 2 an. Beim Betrieb des Verbrennungsmotors 1 an seine Wandungen abgegebene Wärmemengen werden in eine Flüssigkeitskühlung 3 geführt. Die Flüssigkeitskühlung enthält einen Wasserkühler 4, einen Ölkühler 5 und einen Zwischenkühler 6. Durch den Wasserkühler 4 wird ein Luftstrom 7 geführt. Öl - 5 und Zwischenkühler 6 werden miteinander in Reihe geschaltet von einem wärmespeichernden Medium, beispielsweise Wasser, durchströmt. Die Bezugszeichen 8 und 9 beziehen sich auf zwei Wärmeaustauscher, die in Serie geschaltet zu den Kühlern 5 und 6 vom wärmespeichernden Medium durchströmt sind. Entsprechend dem Wasserkühler 4 wird der Luftstrom 7 auch durch den dem Wasserkühler 4 vorgeschalteten Wärmeaustauscher 8 geführt, wohingegen durch den Wärmeaustauscher 9 eine beispielsweise als Lösung ausgebildete sprühfähige Masse geführt wird. Mit den Bezugszeichen 10 ist eine Mischvorrichtung bezeichnet, in welcher beim Arbeitsprozess des Verbrennungsmotors 1 gebildete Abgase mit dem Luftstrom 7 zusammengeführt werden. Der Mischvorrichtung nachgeschaltet ist ein mit Erdgas beheizter Brenner 11 einer Sprühtrockners 12, in dem durch Zerstäuben der sprühfähigen Masse und rasches Trocknen der zerstäubten Masse pulverförmiges Trockengut, beispielsweise auf der Basis einer Keramik, erzeugt wird. Dieses Trockengut wird über einen Auslass 13 aus den Sprühtrockner 12 ausgetragen. Über einen Auslass 14 wird Abluft aus dem Sprühtrockner 12 entfernt.

Die Wirkungsweise dieser Vorrichtung ist wie folgt:
Ein Teil der beim Betrieb des Verbrennungsmotors 1 entstehende Wärme wird über das Kühlwasser in den Wasserkühler 4 geführt. Der Wasserkühler gibt die zugeführte Wärme an den Luftstrom 7 ab. Der solchermassen vorgewärmte Luftstrom 7 wird durch Zugabe von heissen Abgasen in der Mischvorrichtung 10 weiter aufgeheizt. Daher benötigt der Brenner 11 nur noch wenig Erdgas, um den nun abgashaltigen Luftstrahl 7 auf die zum optimalen Betrieb des Sprühtrockners erwünschte Temperatur bzw. Strömungsgeschwindigkeit zu bringen.

Ein weiterer Teil der beim Betrieb des Verbrennungsmotors 1 entstehenden Wärme wird zugleich über das Motoröl bzw. irgendeine weitere Kühlflüssigkeit in den Olkühler 5 bzw. den Zwischenkühler 6 geführt. Beide Kühler sind in Serie geschaltet von einem wärmespeichernden Medium, z.B. Wasser oder Öl, durchströmt. Das wärmespeichernde Medium führt die in den Kühlern 5 und 6 aufgenommene Wärme zu den beiden Wärmeaustauschern 8 und 9, welche zueinander und zu den beiden Kühlern in Serie geschaltet sind. Der in Hinblick auf den Luftstrom 7 in Serie zum Wasserkühler 4 geschaltete Wärmeaustauscher 8 gibt seine durch das wärmespeichernde Medium übertragene Wärme an den Luftstrom 7 ab, welcher so zusätzlich vorgewärmt wird. Hingegen wird der Wärmeaustauscher 9 von der zu zerstäubenden Masse durchströmt. Diese Masse wird durch Abgabe der vom wärmespeichernde Medium aufgenommenen Wärme vorgewärmt.

Je nach Dimensionierung des Sprühtrockners 12 und der Beschaffenheil der zu zerstäubenden Masse kann so die vom Sprühtrockner noch benötigte Energie äusserst gering gehalten werden, gegebenenfalls sogar auch entfallen.

In einer besonders einfach ausgeführten Ausführungsform der Vorrichtung zur Durchführung des erfindungsgemässen Verfahrens können die Mischvorrichtung 10 und die Wärmeaustauscher 8 und 9 entfallen. Der gebenenfalls nur den Wasserkühler 4 aufweisenden Flüssigkeitskühler 3 kann dann zum Vorwärmen des Luftstroms 7 oder der sprühfähigen Masse oder aber auch zum gleichzeitigen Vorwärmen von Luftstrom und Masse verwendet werden. Alternativ kann anstelle der beiden Wärmeaustauscher 8 und 9 lediglich ein einziger Wärmeaustauscher, beispielsweise 8 oder 9, vorgesehen werden. Bei all diesen alternativen Ausführungsformen kann zusätzlich die Mischvorrichtung 10 eingebaut sein.

### BEZUGSZEICHENLISTE

- 1: Verbrennungsmotor
- 2: Generator
- 3: Flüssigkeitskühlung
- 4: Wasserkühler
- 5: Ölkühler
- 6: Zwischenkühler
- 7: Luftstrom
- 8, 9: Wärmeaustauscher
- 10: Mischvorrichtung
- 11: Brenner
- 12: Sprühtrockner
- 13, 14: Auslasse

## Patentansprüche

1. Verfahren zum gleichzeitigen Erzeugen von elektrischer Energie mit einem von einer Wärmekraftmaschine angetriebenen Generator (2) und von pulverförmigem Trockengut aus einer sprühfähigen Masse, die in einem heissen Luftstrom (7) unter Bildung des Trockengutes zerstäubt wird, bei dem von der Wärmekraftmaschine abgebenene Wärme dem Erzeugungsprozess des Trockengutes zugeführt wird, dadurch gekennzeichnet, dass als Wärmekraftmaschine ein Verbrennungsmotor (1) mit Flüssigkeitskühlung (3) verwendet wird, und dass der Luftstrom (7) und/oder die sprühfähige Masse durch die von der Flüssigkeitskühlung (3) aufgenommene Wärme vorgewärmt werden.

2. Verfahren nach Anspruch 1, dadurch gekennzeichnet, dass vom Verbrennungsmotor (1) abgegebene Abgase dem Luftstrom (7) zugeführt werden.

3. Verfahren nach Anspruch 2, dadurch gekennzeichnet, dass die Abgase in den vorgewärmten Luftstrom (7) geführt werden.

4. Verfahren nach Anspruch 2, dadurch gekennzeichnet, dass der Luftstrom (7) an der Flüssigkeitskühlung (3) vorbei geführt wird.

5. Verfahren nach einem der Ansprüche 1 bis 4, dadurch gekennzeichnet, dass zumindest ein Teil der von der Flüssigkeitskühlung (3) aufgenommenen Wärme über ein wärmeaufnehmendes Medium in einen vom Luftstrom (7) durchströmten ersten (8) und/oder einen von der sprühfähigen Masse durchströmten zweiten Wärmeaustauscher (9) geführt wird.

6. Verfahren nach einem der Ansprüche 1 bis 5, dadurch gekennzeichnet, dass zumindest ein Teil der von der Flüssigkeitskühlung (3) aufgenommenen Wärme unmittelbar in den Luftstrom (7) und/oder in die sprühfähige Masse geführt wird.

7. Vorrichtung zur Durchführung des Verfahrens nach einem der Ansprüche 1 bis 6, dadurch gekennzeichnet, dass die Flüssigkeitskühlung (3) einen vom Luftstrom (7) durchströmten Wasserkühler (4) aufweist.

8. Vorrichtung nach Anspruch 7, dadurch gekennzeichnet, dass in Serie zum Wasserkühler (4) ein von Luftstrom (7) durchströmter Wärmeaustauscher (8) geschaltet ist, welchem von einem als Öl- (5) und/oder Zwischenkühler (6) ausgebildeten Teil der Flüssigkeitskühlung (3) ein wärmeabgebendes Medium zugeführt wird.

9. Vorrichtung nach Anspruch 7 oder 8, dadurch gekennzeichnet, dass zusätzlich ein von der sprühfähigen Masse durchströmter Wärmeaustauscher (9) vorgesehen ist, welchem von einem als Öl- (5) und/oder Zwischenkühler (6) ausgebildeten Teil der Flüssigkeitskühlung (3) ein wärmeabgebendes Medium zugeführt wird.

10. Vorrichtung nach einem der Ansprüche 7 bis 9, dadurch gekennzeichnet, dass in Serie zum Wasserkühler (4) mindestens eine Abgase des Verbrennungsmotors (1) im Luftstrom verteilende Mischvorrichtung geschaltet ist.
